# EUROPEAN PATENT SPECIFICATION

(11) **EP 3 822 761 B1**
(45) Date of publication and mention of the grant of the patent: **06.10.2021**
(21) Application number: 19209388.8
(22) Date of filing: 15.11.2019
(51) Int. Cl.: G06F 3/0484

(54) **DISPLAY FOR AN ELECTRONIC MEASUREMENT DEVICE**
ANZEIGE FÜR EINE ELEKTRONISCHE MESSVORRICHTUNG
ÉCRAN POUR UN DISPOSITIF DE MESURE ÉLECTRONIQUE

(43) Date of publication of application: 19.05.2021
(73) Proprietor: Rohde & Schwarz GmbH & Co. KG, 81671 München (DE)
(72) Inventor: Guenther, Mario, 08371 Glauchau (DE)
(74) Representative: Rupp, Christian

(56) References cited:
- WO-A1-2019/124921
- US-A1- 2014 075 315
- US-A1- 2014 258 854
- US-A1- 2018 349 005

## Description

### TECHNICAL FIELD OF THE INVENTION

The invention relates to a display for an electronic measurement device, an electronic measurement device comprising said display and a method for setting a numeric value of an electronic measurement device.

### BACKGROUND OF THE INVENTION

Many instruments require inputting specific numerical values to select an instrument setting or a function. Various solutions for inputting numerical values exist, for instance rotary switches or on-screen keyboards.

Rotary switches, however, have the disadvantage, that their incrementation is generally fixed. Depending on the required input the incrementation can be too coarse, making it difficult to input a specific numerical value, or too fine, making it cumbersome to change an input value over a large range.

On-screen keyboards, on the other hand, cover a large space on any instrument display and, typically, have to be activated first. However, an activation button for such a keyboard can be hard to find on the instrument display. Furthermore, on-screen keyboards have the disadvantage that a numerical value has to be entered fully on the keyboard, which makes setting the value cumbersome and slow.

US 2018/349005 relates to increasing a precision level of a slider to make selecting a specific value easier and more efficient. Initially, a user interface is displayed that includes a slider having a first precision level with a first granularity of values. The computing device detects a first user interaction that moves a marker indicative of a value along the slider. Based on a detection of a second user interaction, the computing device alters the slider to have a second precision level with a second granularity of values.

WO 2019/124921 A1 discloses a media content playback apparatus that can change a playback time point of a media content based on a dragging movement of a user's finger or a mouse pointer on a display. Hereby, the rate of change of a playback time point depends on a starting point of the user's dragging on the display. However, this technique makes it difficult for the user to estimate the input accuracy at any point of the display before starting the dragging movement. Furthermore, this approach does not allow to move through the entire range of the playback time at lower rates of change, where only a section of the playback time is selectable.

Thus, it is an objective to provide an improved display for an electronic measurement device, an improved electronic measurement device and an improved method for setting a numeric value of an electronic measurement device, which avoid the above limitations. In particular, it is an objective to provide a concept for setting numerical values of an electronic measurement device, which allows both a coarse and a fine adjustment of the numerical values in a quick and easy way.

### SUMMARY OF THE INVENTION

The object of the present invention is achieved by the solution provided in the enclosed independent claims. Advantageous implementations of the present invention are further defined in the dependent claims.

According to a first aspect, the invention relates to a display for an electronic measurement according to claim 1. This achieves the advantage that a numeric value of an electronic measurement device can be set in a precise and efficient way. The display can be arranged on the electronic measurement device.

The display can comprise a display segment embedded in a housing or a frame member, wherein the numeric value input area, the linear straight scale and the non-linear curved scale are displayed in the display segment.

The display can comprise a touch-sensitive display, wherein the user, for instance, makes an input via a finger or a stylus.

Alternatively, the user input can be made with a cursor, e.g. a mouse cursor.

In a preferred embodiment, the linear straight scale and the non-linear curved scale delimit, meaning enclose, the numeric value input area, wherein both the linear straight scale and the non-linear curved scale form the boundary of the numeric value input area. In particular, the linear straight scale and the non-linear curved scale are part of the numeric value input area.

The display can be configured to receive the user input directly on the linear straight scale and the non-linear curved scale, as well as any point on the numeric value input area in-between both scales.

Preferably, the starting point respectively end point of the linear straight scale overlap with the starting point respectively end point of the non-linear curved scale on the display, so that the linear straight scale and the non-linear curved scale completely delimit the numeric value input area. The non-linear curved scale can be symmetrically or asymmetrically curved.

An input ballistic of the user input depends on a position of the user input on the numeric value input area, based on the distance of the position of the user input to the linear straight scale and/or the non-linear curved scale. This achieves the advantage that the numerical value can be set efficiently and with selectable input ballistic.

Input ballistic can refer to an acceleration of an input pointer, e.g. a mouse pointer or a selected segment on the numerical value input area that is moved from a first to a second position by the user input. Depending on the position of the input pointer on the numerical value input area, based on its distance to the linear straight scale and the non-linear curved scale, the acceleration can be faster or slower.

More generally, input ballistic can also be a measure of the input sensitivity of the user input. Input ballistic refers to the rate of change of the numerical value when moving an input pointer from a first to a second position on the numerical value input area. For instance, at the linear straight scale the input ballistic is linear, whereas close to the non-linear curved scale the input ballistic is logarithmic (in case of a logarithmic non-linear scale).

In particular, depending on the distance to the linear straight scale and the non-linear curved scale, an input pointer travels over a longer or a shorter distance when moving from a first to a second position on the numerical value input area.

In an embodiment, the user input comprises a swiping motion over the numeric value input area, wherein the display is configured to determine the setting of the numeric value based on an endpoint of the swiping motion on the numeric value input area. This achieves the advantage that the numerical value can be set efficiently.

In an embodiment, the display is configured to determine a change of the numerical value from an initial value to an end value during the swiping motion, wherein a rate of the change depends on a position of the user input on the numeric value input area during the swiping motion, based on the position of the user input at a starting point of the swiping motion. This achieves the advantage that a numerical value of the electronic measurement device can be changed efficiently and with selectable rate.

In particular, the rate of the change of the numerical value during the swiping motion depends on a current position of the user input on the numeric value input area during the swiping motion.

The rate of change can refer to a number of incremental or decremental steps between the initial value and the end value, and/or to the degree of change between each incremental or decremental step. For instance, the rate of change is linear at the linear straight scale and logarithmic at the non-linear curved scale (if the non-linear curved scale is a logarithmic scale).

The initial value can represent a state or setting of the electronic measurement device before receiving the user input.

In an embodiment, the non-linear curved scale is a logarithmic scale.

In an embodiment, the display is configured to display an input indicator in the numeric value input area, wherein the input indicator can be displaced by the user input from an initial position to an end position, wherein the end position represents the setting of the numeric value. This achieves the advantage that the numerical value can be set efficiently.

In an embodiment, the input indicator comprises an isovalue line, which connects a currently selected numeric value on the linear straight scale to the same value on the non-linear curved scale. This achieves the advantage that a current setting of the numerical value is displayed efficiently.

An isovalue line can be a line that connects a numerical value on the linear scale to the same numerical value on the non-linear curved scale, wherein any point on the line represents the same numerical value. In other words, the display is configured to determine the same numerical value when a user input is performed at any point of the same isovalue line.

In an embodiment, the linear straight scale and/or the non-linear curved scale comprise a labeling with pre-defined numbers, wherein the display is further configured to receive a user input at a position of one of the pre-defined numbers, and to determine the setting of the numeric value based on the value of the respective pre-defined number. This achieves the advantage that pre-defined values can be input in a fast and easy way.

The labeling can additionally comprise a marking at every pre-defined number along the linear straight scale and/or the non-linear curved scale. The display can further be configured to register the user input at the pre-defined number at the position of its respective marking.

In an embodiment, the display comprises a display section, which displays the set numeric value of the electronic measurement device as a digital number.

According to a second aspect, the invention relates to an electronic measurement device, comprising the display of the first aspect of the invention. This achieves the advantage that a numeric value of an electronic measurement device can be set in a precise and efficient way.

The numeric value can define a state and/or a setting of the electronic measuring device.

In an embodiment, the electronic measurement device is any one of the following devices: an audio analyzer, an oscilloscope, a network analyzer, a power meter and/or volt meter, a receiver, a meter and/or counter, a signal and/or spectrum analyzer, a test and/or measurement device for broadcasting, a signal generator, a spectrum monitoring device, a wireless communications tester.

According to a third aspect, the invention relates to a method according to independent claim 11. This achieves the advantage that a numeric value of an electronic measurement device can be set in a precise and efficient way.

An input ballistic of the user input depends on a position of the user input on the numeric value input area, based on the distance of the position of the user input to the linear straight scale and/or the non-linear curved scale. This achieves the advantage that the numerical value can be set efficiently and with selectable input ballistic.

In an embodiment, the user input is a swiping motion over the numeric value input area, wherein the setting of the numeric value is determined based on an endpoint of the swiping motion on the numeric value input area. This achieves the advantage that the numerical value can be set efficiently.

In an embodiment, the method further comprises the further step of determining a change of the numerical value from an initial value to an end value during the swiping motion, wherein a rate of the change depends on a position of the user input on the numeric value input area during the swiping motion, based on the position of the user input at a starting point of the swiping motion. This achieves the advantage that a numerical value of the electronic measurement device can be changed efficiently and with selectable rate.

The rate of change can refer to a number of incremental or decremental steps between the initial value and the end value.

In an embodiment, the method comprises the further step of displaying an input indicator in the numeric value input area, wherein the input indicator can be displaced by the user input from an initial position to an end position, wherein the end position represents the setting of the numeric value.

Preferably, the indicator comprises an isovalue line, which connects a currently selected numeric value on the linear straight scale to the same value on the non-linear curved scale.

In an embodiment, the linear straight scale and/or the non-linear curved scale comprise a labeling with pre-defined numbers, wherein the user input is received on a position of one of the pre-defined numbers, and the setting of the numeric value is determined based on the value of the respective pre-defined number.

Preferably, the method further comprises the step of displaying the set numerical value of the electronic measurement device as a digital number in a display segment.

A computer program product can comprise program code for performing the steps of the above described method, when the computer program product runs on a computer or a digital signal processor.

### BRIEF DESCRIPTION OF THE DRAWINGS

The invention will be explained in the followings together with the figures.
- Fig. 1: shows a schematic diagram of a display for an electronic measurement device according to an embodiment;
- Fig. 2: shows a schematic diagram of a display for an electronic measurement device according to an embodiment;
- Fig. 3: shows a schematic diagram of an electronic measurement device according to an embodiment; and
- Fig. 4: shows a schematic diagram of a method for setting a numeric value of an electronic measurement device according to an embodiment.

### DETAILED DESCRIPTION OF THE PREFERRED EMBODIMENTS

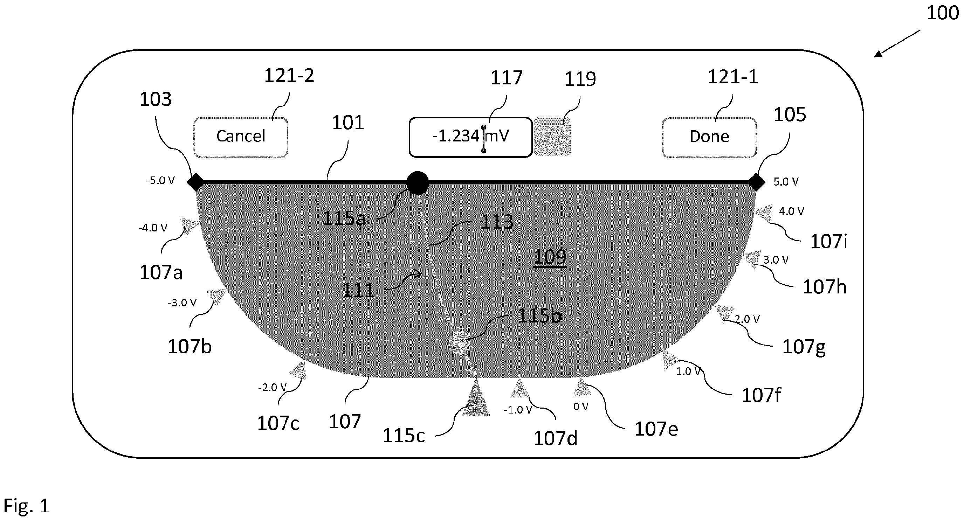

Fig. 1 shows a schematic diagram of a display 100 for an electronic measurement device according to an embodiment.

The display 100 is configured to display a linear straight scale 101 comprising a value range from a lower limit value 103 to an upper limit value 105, and to display a non-linear curved scale 107 comprising the same value range as the linear straight scale 101, wherein the linear straight scale and the non-linear curved scale delimit a numeric value input area 109 on the display 100. The display 100 is further configured to receive a user input on the numeric value input area 109, and to determine a setting of a numeric value of the electronic measurement device based on the user input on the numeric value input area 109.

In an embodiment, Fig. 1 shows an element of the display 100 that displays a visible image. This element can be incorporated in a housing or a frame member (not shown) of the display 100.

The display 100 can be a touch-sensitive display, wherein the user can make an input via a finger or a stylus. Alternatively, the user input can also be made with a cursor, e.g. a mouse cursor.

The display 100 can be configured to receive the user input directly on the linear straight scale 101 and the non-linear curved scale 107, as well as on any point on the numeric value input area 109 in-between both scales 101, 107.

Preferably, the starting points 103 respectively end points 105 of the linear straight scale 101 and the non-linear curved scale 107 are identical.

In Fig. 1, the non-linear curved scale 107 is a logarithmic scale.

The non-linear curved scale can be symmetrically curved, as shown in Fig. 1, or asymmetrically curved.

The length of the linear straight scale 101 and the length and curvature of the non-linear curved scale 107 determine the shape and size of the numeric value input area 109. The numeric value input area 109 has, for instance, a half circle or a half ellipse shape.

In the exemplary embodiment of Fig. 1, an input indicator 111 is displayed in the numeric value input area 109. The input indicator 111 can be displaced by the user input from an initial position to an end position. Thereby, the initial position represents an initially set numerical value and the end position represents the newly set numeric value of the electronic measurement device.

The user input can be a swiping or dragging motion over the numeric value input area 109, in particular over the input indicator 111. Thereby, the user can drag the input indicator 111 from the initial to the end position.

The input indicator 111 can comprise an isovalue line 113, which connects a currently selected numeric value on the linear straight scale 101 to the same value on the non-linear curved scale 107.

The input indicator 111 can further comprise at least one input element 115a-c. In Fig. 1, the input indicator 111 comprises three input elements 115a-c along the isovalue line 113. The first input element 115a is located on the linear straight scale 101, the second input element 115b is located close to the logarithmic scale 107 and the third input element 115c is located on the logarithmic scale 107. It is conceivable to have further input elements, for instance in the center of the isovalue line 113 or close to the linear straight scale 101.

The input elements 115a, 115b, 115c can be input pointers and/or touchable silders.

To change a numeric value of the measurement device, a user can select such an input element 115a, 115b, 115c, e.g. via a finger or a mouse pointer, and drag the selected input element 115a-c towards the lower limit value 103 or the upper limit value 105.

Thereby, the length of the drag that is required to change the numeric value from a first to a second value depends on the distance of the selected input element 115a, 115b, 115c to the linear straight scale 101 and the non-linear curved scale 107.

For instance, for an identical numeric value change, the first input element 115a on the linear straight scale is dragged over a shorter distance than the third input element 115c.

In particular, the rate of change during the dragging or swiping motion also depends on a position of the user input, in particular the input element 115a-c, on the numeric value input area 109.

The rate of change can refer to a number of incremental or decremental steps between the initial value and the end value. The closer the input element 115a-c is to the non-linear curved scale, the more incremental or decremental steps exist between the first and the second value.

At the same time, an input ballistic can depend on the position on the numeric value input area 109. The input ballistic on the linear scale 101 can be a linear ballistic and the ballistic directly on the logarithmic scale 107 can be a logarithmic ballistic. The input ballistic at any other position on the numeric value input area 109 can be a mixture of a linear and an logarithmic ballistic. Thus, the display simultaneously allows for a coarse adjustment of the numerical value at the linear straight scale 101 and a fine adjustment at the non-linear curved scale 107.

Preferably, this allows a fast and coarse setting of the numeric value close to or at the linear straight scale, and, at the same time, a slower and finer setting of the numeric value close to or at the non-linear curved scale.

In an embodiment, the at least one input element 115a. 115b, 155c can be displaced along the isovalue line 113, to change the input sensitivity and/or input ballistic. In particular, this displacement along the isovalue line does not change the setting of the numerical value.

In Fig. 1, the logarithmic scale 107 comprises a labeling 107a-i with pre-defined numbers. The labeling further comprises markings at the respective pre-defined numbers.

The display can be configured to receive a user input at a position of one of the pre-defined numbers or its respective marking, and to set the numeric value to the respective pre-defined number.

The display 100 can further be configured to receive the user input at the position of the lower limit value 103 and the upper limit value 105, and to set the numeric value to the respective limit value.

The display 100 can further comprise a display section 117, which displays the set numeric value of the electronic measurement device as a digital number.

The display section 117 in Fig. 1 shows a cursor. An external keyboard can be connected to the electronic measurement device, to input the numerical value at the cursor position.

Preferably, the display 100 comprise a button 119 to activate an on-screen keyboard. The on-screen keyboard can additionally be used to input the numerical value.

The display 100 can further comprise buttons 121-1, 121-2 to accept or cancel a set numerical value.

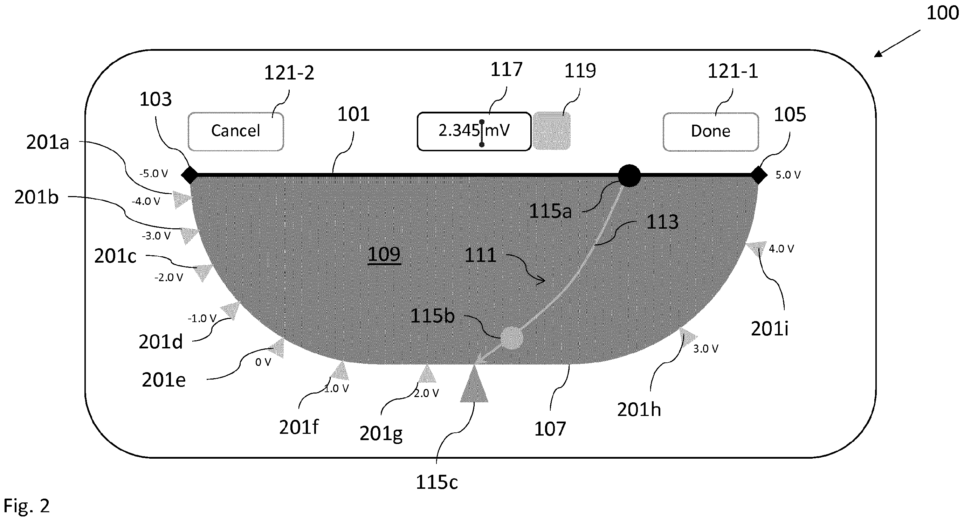

Fig. 2 shows a schematic diagram of the display 100 for the electronic measurement device according to a further embodiment.

Compared to Fig. 1, the display 100 in Fig. 2 has a different labeling 201a-i of the non-linear curved scale 107. Furthermore, the input indicator 111 in Fig. 2 is set to a higher value.

The labeling 201a-i can be set by the user. In addition, the display 100 can offer various pre-defined labeling options for the non-linear curved scale 107 respectively linear straight scale 101.

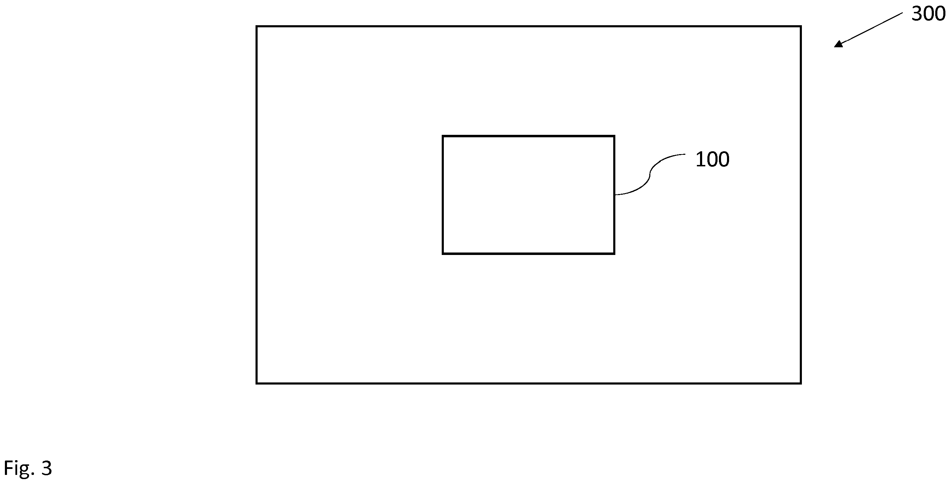

Fig. 3 shows an electronic measurement device 300 according to an embodiment.

The electronic measurement device 300 can comprise a display 100, in particular the display 100 as shown in Fig. 1 or Fig. 2. The numeric value can define a state and/or a setting of the electronic measuring device 300.

The electronic measurement device can additionally comprise a rotary knob and/or a keyboard to manually change the numerical value.

The electronic measurement device 300 can be an instrument. In particular, the electronic measurement device 300 is any one of the following devices: an audio analyzer, an oscilloscope, a network analyzer, a power meter and/or volt meter, a receiver, a meter and/or counter, a signal and/or spectrum analyzer, a test and/or measurement device for broadcasting, a signal generator, a spectrum monitoring device, a wireless communications tester.

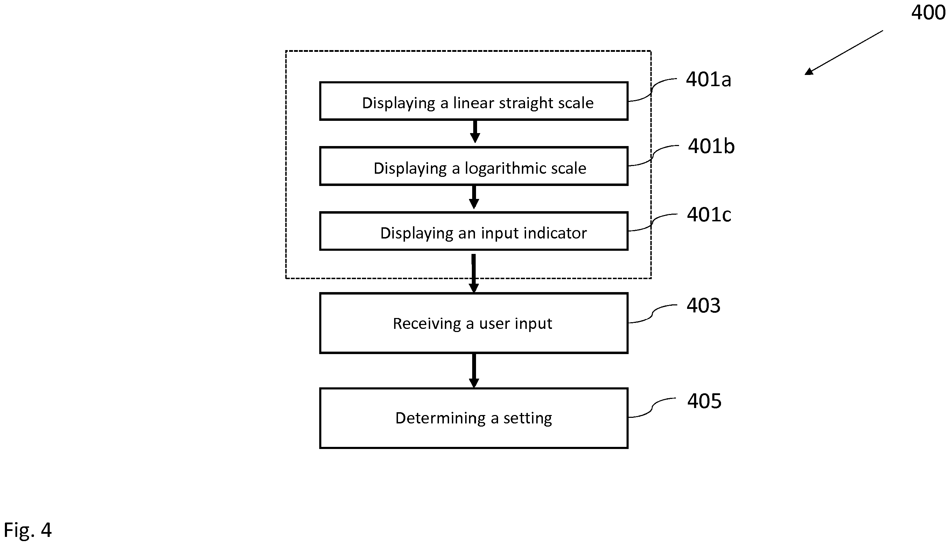

Fig. 4 shows a schematic diagram of a method 400 for setting the numeric value of the electronic measurement device 300 according to an embodiment.

The method 400 comprises the steps of displaying 401a the linear straight scale 101 comprising the value range from the lower limit value 103 to the upper limit value 105, displaying 401b the non-linear curved scale 107 comprising the same value range as the linear straight scale 101, wherein the linear straight scale 101 and the non-linear curved scale 107 delimit the numeric value input area 109 on the display 100. The method further comprises the steps of receiving 403 the user input on the numeric value input area, and determining 405 the setting of a numeric value of the electronic measurement device based on the user input on the numeric value input area.

The method 400 in Fig. 4 further comprises the step of displaying 401c the input indicator 111 in the numeric value input area 109, wherein the input indicator can be displaced by the user input from an initial position to an end position, wherein the end position represents the setting of the numeric value.

In an embodiment, the method 400 further comprises the step of determining an input ballistic of the received user input depending on the position of the user input on the numeric value input area 109, based on the distance of the position of the user input to the linear straight scale 101 and/or the non-linear scale 107.

The user input can be a swiping motion over the numeric value input area 109, and the setting of the numeric value can be determined based on the endpoint of the swiping motion on the numeric value input area 109.

The method 400 can further comprise the step of determining the change of the numerical value from the initial value to the end value during the swiping motion, wherein the rate of the change depends on a position of the user input on the numeric value input area 109 at a point of the swiping motion, in particular at a starting point of the swiping motion.

It is important to note that the display 100, the electronic measurement device 300 and the method 400 very closely correspond. Therefore, all of the above said regarding the display 100 is also applicable to the electronic measurement device 300 and the method 400. Everything which is described in the description and/or claimed in the claims and/or drawn in the drawings can be combined.

All features described above or features shown in the figures can be combined with each other in any advantageous manner within the scope of the invention.

## Claims

1. A display (100) for an electronic measurement device (300),
wherein the display (100) is configured to display a linear straight scale (101) comprising a value range from a lower limit value (103) to an upper limit value (105),
**characterised in that**
the display (100) is further configured to display a non-linear curved scale (107) comprising the same value range as the linear straight scale (101),
wherein the linear straight scale (101) and the non-linear curved scale (107) delimit a numeric value input area (109),
wherein the display (100) is configured to receive a user input on the numeric value input area (109), and
wherein the display (100) is configured to determine a setting of a numeric value of the electronic measurement device (300) based on the user input on the numeric value input area (109),
wherein a rate of change of the numerical value when moving an input pointer from a first to a second position on the numerical value input area (109) depends on a position of the user input on the numeric value input area (109), based on the distance of the position of the user input to the linear straight scale (101) and the non-linear curved scale (107).

2. The display (100) of claim 1, wherein the user input comprises a swiping motion over the numeric value input area (109), wherein the display (100) is configured to determine the setting of the numeric value based on an endpoint of the swiping motion on the numeric value input area (109).

3. The display (100) of claim 2, wherein the display (100) is configured to determine a change of the numerical value from an initial value to an end value during the swiping motion, wherein a rate of the change depends on a position of the user input on the numeric value input area (109) during the swiping motion, in particular on the position of the user input at a starting point of the swiping motion.

4. The display (100) of any one of the preceding claims, wherein the non-linear curved scale (107) is a logarithmic scale.

5. The display (100) of any one of the preceding claims, wherein the display (100) is configured to display an input indicator (111) in the numeric value input area, wherein the input indicator (111) can be displaced by the user input from an initial position to an end position, wherein the end position represents the setting of the numeric value.

6. The display (100) of claim 5, wherein the input indicator (111) comprises an isovalue line (113), which connects a currently selected numeric value on the linear straight scale (101) to the same value on the non-linear curved scale (107).

7. The display (100) of any one of the preceding claims, wherein the linear straight scale (101) and/or the non-linear curved scale (107) comprise a labeling (107a-i) with pre-defined numbers, wherein the display is further configured to receive a user input at a position of one of the pre-defined numbers, and to determine the setting of the numeric value based on the value of the respective pre-defined number.

8. The display (100) of any one of the preceding claims, wherein the display (100) comprises a display section (117), which displays the set numeric value of the electronic measurement device (300) as a digital number.

9. An electronic measurement device (300), comprising the display (100) of any one of the preceding claims.

10. The electronic measurement device (300) of claim 9, wherein the electronic measurement device (300) is any one of the following devices: an audio analyzer, an oscilloscope, a network analyzer, a power meter and/or volt meter, a receiver, a meter and/or counter, a signal and/or spectrum analyzer, a test and/or measurement device for broadcasting, a signal generator, a spectrum monitoring device, a wireless communications tester.

11. A method (400) for setting a numeric value of an electronic measurement device (300), comprising the steps of:
displaying (401a) a linear straight scale (101) comprising a value range from a lower limit value (103) to an upper limit value (105),
**characterised by**
displaying (401b) a non-linear curved scale (107) comprising the same value range as the linear straight scale (101),
wherein the linear straight scale (101) and the non-linear curved scale (107) delimit a numeric value input area (109),
receiving (403) a user input on the numeric value input area (109), and
determining (405) a setting of a numeric value of the electronic measurement device (300) based on the user input on the numeric value input area (109),
wherein a rate of change of the numerical value when moving an input pointer from a first to a second position on the numerical value input area (109) depends on a position of the user input on the numeric value input area (109), Z based on the distance of the position of the user input to the linear straight scale (101) and the non-linear curved scale (107).

12. The method (400) of claim 11, wherein the user input is a swiping motion over the numeric value input area (109), wherein the setting of the numeric value is determined based on an endpoint of the swiping motion on the numeric value input area (109).

13. The method (400) of claim 12, further comprising the step of:
determining a change of the numerical value from an initial value to an end value during the swiping motion, wherein a rate of the change depends on a position of the user input on the numeric value input area (109) during the swiping motion, in particular on the position of the user input at a starting point of the swiping motion.

14. The method (400) of any one of claims 11 to 13, further comprising the step of:
displaying (401c) an input indicator (111) in the numeric value input area (109), wherein the input indicator (111) can be displaced by the user input from an initial position to an end position, wherein the end position represents the setting of the numeric value.

## Patentansprüche

1. Eine Anzeige (100) für eine elektronische Messvorrichtung (300),
wobei die Anzeige (100) so konfiguriert ist, dass eine lineare geradlinige Skala (101) angezeigt wird, die einen Wertebereich von einem unteren Grenzwert (103) bis zu einem oberen Grenzwert (105) aufweist,
**dadurch gekennzeichnet, dass**
die Anzeige (100) weiter so konfiguriert ist, dass eine nicht-lineare gekrümmte Skala (107) angezeigt wird, die denselben Wertebereich wie die lineare geradlinige Skala (101) aufweist,
wobei die lineare geradlinige Skala (101) and die nicht-lineare gekrümmte Skala (107) einen Zahlenwert-Eingabebereich (109) abgrenzen,
wobei die Anzeige (100) so konfiguriert ist, dass eine Benutzereingabe im Zahlenwert-Eingabebereich (109) empfangen wird,
wobei die Anzeige (100) so konfiguriert ist, dass eine Einstellung eines Zahlenwerts der elektronischen Messvorrichtung (300) auf der Basis der Benutzereingabe im Zahlenwert-Eingabebereich (109) festgelegt wird,
wobei eine Änderungsrate des Zahlenwerts bei Bewegen eines Eingabezeigers von einer ersten zu einer zweiten Position im Zahlenwert-Eingabebereich (109) von einer Position der Benutzereingabe im Zahlenwert-Eingabebereich (109), basierend auf dem Abstand der Position der Benutzereingabe zur linearen geradlinigen Skala (101) und nicht-linearen gekrümmten Skala (107), abhängt.

2. Die Anzeige (100) nach Anspruch 1, wobei die Benutzereingabe eine Wischbewegung über den Zahlenwert-Eingabebereich (109) umfasst, wobei die Anzeige (100) so konfiguriert ist, dass die Einstellung des Zahlenwerts basierend auf einem Endpunkt der Wischbewegung im Zahlenwert-Eingabebereich (109) festgelegt wird.

3. Die Anzeige (100) nach Anspruch 2, wobei die Anzeige (100) so konfiguriert ist, dass eine Änderung des Zahlenwerts von einem Anfangswert zu einem Endwert während der Wischbewegung festgelegt wird, wobei eine Änderungsrate von einer Position der Benutzereingabe im Zahlenwert-Eingabebereich (109) während der Wischbewegung, insbesondere von der Position der Benutzereingabe an einem Startpunkt der Wischbewegung, abhängt.

4. Die Anzeige (100) nach einem der vorstehenden Ansprüche, wobei die nicht-lineare gekrümmte Skala (107) eine logarithmische Skala ist.

5. Die Anzeige (100) nach einem der vorstehenden Ansprüche, wobei die Anzeige (100) so konfiguriert ist, dass ein Eingabeindikators (111) im Zahlenwert-Eingabebereich angezeigt wird, wobei der Eingabeindikator (111) durch die Benutzereingabe von einer Anfangsposition zu einer Endposition verschoben werden kann, wobei die Endposition die Einstellung des Zahlenwerts darstellt.

6. Die Anzeige (100) nach Anspruch 5, wobei der EingabeIndikator (111) eine Isowertlinie (113) aufweist, die einen aktuell ausgewählten Zahlenwert auf der linearen geradlinigen Skala (101) mit demselben Wert auf der nicht-linearen gekrümmten Skala (107) verbindet.

7. Eine Anzeige (100) nach einem der vorstehenden Ansprüche, wobei die lineare geradlinige Skala (101) und/oder die nicht-lineare gekrümmte Skala (107) eine Kennzeichnung (107a-i) mit vordefinierten Zahlen aufweisen, wobei die Anzeige weiter so konfiguriert ist, dass eine Benutzereingabe an einer Position einer der vordefinierten Zahlen empfangen wird und die Einstellung des Zahlenwerts basierend auf dem Wert der entsprechenden vordefinierten Zahl festgelegt wird.

8. Eine Anzeige (100) nach einem der vorstehenden Ansprüche, wobei die Anzeige (100) einen Anzeige-Abschnitt (117) aufweist, der den eingestellten Zahlenwert der elektronischen Messvorrichtung (300) als Digitalzahl anzeigt.

9. Eine elektronische Messvorrichtung (300), die die Anzeige (100) nach einem der vorstehenden Ansprüche aufweist.

10. Die elektronische Messvorrichtung (300) nach Anspruch 9, wobei die elektronische Messvorrichtung (300) eine der folgenden Vorrichtungen ist: ein Audio-Analysator, ein Oszillator, ein Netzwerk-Analysator, ein Leistungsmesser und/oder ein Voltmesser, ein Empfänger, ein Messgerät und/oder ein Zähler, ein Signal- und/oder Spektrum-Analysator, eine Test-und/oder Messvorrichtung zur Rundfunkübertragung, ein Signalgenerator, eine Spektrum-Überwachungsvorrichtung, ein drahtloser Kommunikationsprüfer.

11. Ein Verfahren (400) zum Einstellen eines Zahlenwerts einer elektronischen Messvorrichtung (300), das folgende Schritte umfasst:
Anzeigen (401a) einer linearen geradlinigen Skala (101), die einen Wertebereich von einem unteren Grenzwert (103) bis zu einem oberen Grenzwert (105) aufweist,
**gekennzeichnet durch**
Anzeigen (401b) einer nicht-linearen gekrümmten Skala (107), die denselben Wertebereich wie die lineare geradlinige Skala (101) aufweist,
wobei die lineare geradlinige Skala (101) and die nicht-lineare gekrümmte Skala (107) einen Zahlenwert-Eingabebereich (109) abgrenzen,
Empfangen (403) einer Benutzereingabe im Zahlenwert-Eingabebereich (109), und
Festlegen (405) einer Einstellung eines Zahlenwerts der elektronischen Messvorrichtung (300) auf der Basis der Benutzereingabe im Zahlenwert-Eingabebereich (109),
wobei eine Änderungsrate des Zahlenwerts bei Bewegen eines Eingabezeigers von einer ersten zu einer zweiten Position im Zahlenwert-Eingabebereich (109) von einer Position der Benutzereingabe im Zahlenwert-Eingabebereich (109), basierend auf dem Abstand der Position der Benutzereingabe zur linearen geradlinigen Skala (101) und nicht-linearen gekrümmten Skala (107), abhängt.

12. Das Verfahren (400) nach Anspruch 11, wobei die Benutzereingabe eine Wischbewegung über den Zahlenwert-Eingabebereich (109) ist, wobei die Einstellung des Zahlenwerts basierend auf einem Endpunkt der Wischbewegung im Zahlenwert-Eingabebereich (109) festgelegt wird.

13. Das Verfahren (400) nach Anspruch 12, das weiter folgenden Schritt umfasst:
Festlegen einer Änderung des Zahlenwerts von einem Anfangswert zu einem Endwert während der Wischbewegung, wobei eine Änderungsrate von einer Position der Benutzereingabe im Zahlenwert-Eingabebereich (109) während der Wischbewegung, insbesondere von der Position der Benutzereingabe an einem Startpunkt der Wischbewegung, abhängt.

14. Das Verfahren (400) nach einem der Ansprüche 11 bis 13, das weiter folgenden Schritt umfasst:
Anzeigen (401c) eines Eingabeindikators (111) im Zahlenwert-Eingabebereich (109), wobei der Eingabeindikator (111) durch die Benutzereingabe von einer Anfangsposition zu einer Endposition verschoben werden kann, wobei die Endposition die Einstellung des Zahlenwerts darstellt.

## Revendications

1. Afficheur (100) pour un dispositif électronique de mesure (300),
dans lequel l'afficheur (100) est configuré pour afficher une échelle rectiligne linéaire (101) comprenant une plage de valeurs, d'une valeur limite inférieure (103) à une valeur limite supérieure (105),
**caractérisé en ce que**
l'afficheur (100) est en outre configuré pour afficher une échelle incurvée non linéaire (107) comprenant la même plage de valeurs que l'échelle rectiligne linéaire (101),
dans lequel l'échelle rectiligne linéaire (101) et l'échelle incurvée non linéaire (107) délimitent une zone de saisie de valeur numérique (109),
dans lequel l'afficheur (100) est configuré pour recevoir une saisie d'utilisateur sur la zone de saisie de valeur numérique (109), et
dans lequel l'afficheur (100) est configuré pour déterminer un réglage d'une valeur numérique du dispositif électronique de mesure (300) sur la base de la saisie d'utilisateur sur la zone de saisie de valeur numérique (109),
dans lequel une vitesse de variation de la valeur numérique lors du déplacement d'un pointeur de saisie d'une première à une seconde position sur la zone de saisie de valeur numérique (109) dépend d'une position de la saisie d'utilisateur sur la zone de saisie de valeur numérique (109), basée sur la distance de la position de la saisie d'utilisateur par rapport à l'échelle rectiligne linéaire (101) et l'échelle incurvée non linéaire (107) .

2. Afficheur (100) selon la revendication 1, dans lequel la saisie d'utilisateur comprend un mouvement de balayage au-dessus de la zone de saisie de valeur numérique (109), dans lequel l'afficheur (100) est configuré pour déterminer le réglage de la valeur numérique sur la base d'un point final du mouvement de balayage sur la zone de saisie de valeur numérique (109) .

3. Afficheur (100) selon la revendication 2, dans lequel l'afficheur (100) est configuré pour déterminer une variation de la valeur numérique d'une valeur initiale à une valeur finale pendant le mouvement de balayage, dans lequel une vitesse de la variation dépend d'une position de la saisie d'utilisateur sur la zone de saisie de valeur numérique (109) pendant le mouvement de balayage, en particulier de la position de la saisie d'utilisateur à un point de départ du mouvement de balayage.

4. Afficheur (100) selon l'une quelconque des revendications précédentes, dans lequel l'échelle incurvée non linéaire (107) est une échelle logarithmique.

5. Afficheur (100) selon l'une quelconque des revendications précédentes, dans lequel l'afficheur (100) est configuré pour afficher un indicateur de saisie (111) dans la zone de saisie de valeur numérique, dans lequel l'indicateur de saisie (111) peut être déplacé par la saisie d'utilisateur d'une position initiale à une position finale, dans lequel la position finale représente le réglage de la valeur numérique.

6. Afficheur (100) selon la revendication 5, dans lequel l'indicateur de saisie (111) comprend une ligne d'isovaleurs (113), qui relie une valeur numérique actuellement sélectionnée sur l'échelle rectiligne linéaire (101) à la même valeur sur l'échelle incurvée non linéaire (107).

7. Afficheur (100) selon l'une quelconque des revendications précédentes, dans lequel l'échelle rectiligne linéaire (101) et/ou l'échelle incurvée non linéaire (107) comprennent un marquage (107a-i) ayant des nombres prédéfinis, dans lequel l'afficheur est en outre configuré pour recevoir une saisie d'utilisateur à une position de l'un des nombres prédéfinis, et pour déterminer le réglage de la valeur numérique sur la base de la valeur du nombre prédéfini respectif.

8. Afficheur (100) selon l'une quelconque des revendications précédentes, dans lequel l'afficheur (100) comprend une section d'affichage (117), qui affiche la valeur numérique réglée du dispositif électronique de mesure (300) comme un nombre numérique.

9. Dispositif électronique de mesure (300), comprenant l'afficheur (100) selon l'une quelconque des revendications précédentes.

10. Dispositif électronique de mesure (300) selon la revendication 9, dans lequel le dispositif électronique de mesure (300) est l'un quelconque parmi les dispositifs suivants : un analyseur audio, un oscilloscope, un analyseur de réseau, un wattmètre et/ou un voltmètre, un récepteur, un métreur et/ou un compteur, un analyseur de signal et/ou de spectre, un dispositif de test et/ou de mesure pour une retransmission, un générateur de signal, un dispositif de surveillance de spectre, un testeur de communications sans fil.

11. Procédé (400) pour le réglage d'une valeur numérique d'un dispositif électronique de mesure (300), comprenant les étapes de :
l'affichage (401a) d'une échelle rectiligne linéaire (101) comprenant une plage de valeurs, d'une valeur limite inférieure (103) à une valeur limite supérieure (105),
**caractérisé par**
l'affichage (401b) d'une échelle incurvée non linéaire (107) comprenant la même plage de valeurs que l'échelle rectiligne linéaire (101),
dans lequel l'échelle rectiligne linéaire (101) et l'échelle incurvée non linéaire (107) délimitent une zone de saisie de valeur numérique (109),
la réception (403) d'une saisie d'utilisateur sur la zone de saisie de valeur numérique (109), et
la détermination (405) d'un réglage d'une valeur numérique du dispositif électronique de mesure (300) sur la base de la saisie d'utilisateur sur la zone de saisie de valeur numérique (109),
dans lequel une vitesse de variation de la valeur numérique lors du déplacement d'un pointeur de saisie d'une première à une seconde position sur la zone de saisie de valeur numérique (109) dépend d'une position de la saisie d'utilisateur sur la zone de saisie de valeur numérique (109), basée sur la distance de la position de la saisie d'utilisateur par rapport à l'échelle rectiligne linéaire (101) et l'échelle incurvée non linéaire (107) .

12. Procédé (400) selon la revendication 11, dans lequel la saisie d'utilisateur est un mouvement de balayage au-dessus de la zone de saisie de valeur numérique (109), dans lequel le réglage de la valeur numérique est déterminé sur la base d'un point final du mouvement de balayage sur la zone de saisie de valeur numérique (109).

13. Procédé (400) selon la revendication 12, comprenant en outre l'étape de :
la détermination d'une variation de la valeur numérique d'une valeur initiale à une valeur finale pendant le mouvement de balayage, dans lequel une vitesse de la variation dépend d'une position de la saisie d'utilisateur sur la zone de saisie de valeur numérique (109) pendant le mouvement de balayage, en particulier de la position de la saisie d'utilisateur à un point de départ du mouvement de balayage.

14. Procédé (400) selon l'une quelconque des revendications 11 à 13, comprenant en outre l'étape de :
l'affichage (401c) d'un indicateur de saisie (111) dans la zone de saisie de valeur numérique (109), dans lequel l'indicateur de saisie (111) peut être déplacé par la saisie d'utilisateur d'une position initiale à une position finale, dans lequel la position finale représente le réglage de la valeur numérique.
